# EUROPÄISCHE PATENTSCHRIFT

(11) **EP 3 096 162 B1**
(45) Veröffentlichungstag und Bekanntmachung des Hinweises auf die Patenterteilung: **30.08.2017**
(21) Anmeldenummer: 16159239.9
(22) Anmeldetag: 08.03.2016
(51) Int. Cl.: G01V 8/20

(54) **OPTOELEKTRONISCHER SENSOR**
OPTOELECTRONIC SENSOR
CAPTEUR OPTOÉLECTRONIQUE

(30) Priorität: 20.05.2015 DE 202015102596 U
(43) Veröffentlichungstag der Anmeldung: 23.11.2016
(73) Patentinhaber: SICK AG, 79183 Waldkirch (DE)
(72) Erfinder: Eble, Dr. Johannes, 79183 Waldkirch (DE); Häringer, Helmut, 79215 Elzach (DE)

(56) Entgegenhaltungen:
- EP-A1- 1 577 684
- EP-A1- 1 770 414
- EP-A1- 2 511 737
- DE-U1-202013 104 607
- JP-A- H11 329 179

## Beschreibung

Die Erfindung betrifft einen optoelektronischen Sensor mit mindestens einer Elektronikkarte, die Lichtsenderelemente und/oder Lichtempfangselemente aufweist, und mit zumindest zwei optischen Modulen, die auf der Elektronikarte befestigbar sind.

In der Automatisierungsindustrie werden optoelektronische Sensoren eingesetzt, um eine Arbeitsumgebung einer gefahrbringenden Maschine oder den Zugang zu der Arbeitsumgebung der gefahrbringenden Maschine zu überwachen oder generell ein Objekt zu erfassen.

Zu den optoelektronischen Sensoren zählen zum Beispiel Lichtschranken, die nach dem Prinzip arbeiten, einen Lichtstrahl mittels der Lichtsenderelementen auszusenden, in den Lichtempfangselementen zu registrieren und zu bewerten, ob das Empfangssignal eine Schaltschwelle über-/unterschreitet oder nicht. In einem solchen Lichtgitter werden effektiv mehrere Lichtschranken parallel zueinander zusammengefügt, so dass ein definierter Bereich durch die Lichtschranken beleuchtet wird. Es ist bekannt, Lichtgitter modular aufzubauen, so dass eine Kaskadierung von Lichtgittern erwünscht ist, um einen größeren definierten überwachten Bereich zu ermöglichen.

Bei der Kaskadierung werden mehrere Lichtgitter miteinander verbunden, wobei mehrere Elektronikkarten mit Lichtsenderelementen und/oder Lichtempfangselementen miteinander verbunden werden können. Hierbei wird eine hohe Auflösung von den Lichtgittern angestrebt, wobei ein Raster der Lichtgitter kleiner wird. Dadurch werden die Lichtsenderelemente und/oder die Lichtempfangselemente und insbesondere die Abstände zwischen den Lichtsenderelementen und/oder den Lichtempfangselementen kleiner.

Um gegenseitige Beeinflussung der Lichtstrahlen der Lichtsenderelemente oder Umspiegelungseffekte zu minimieren, die die Messgenauigkeit der Lichtgitter reduziert, und Simultanscan, d. h. mehrere Lichtsenderelemente und/oder Lichtempfangselemente sind gleichzeitig aktiv, zu ermöglichen, muss ein Ausstrahl- bzw. Empfangswinkel für jedes Lichtsenderelement bzw. Lichtempfangselement eingeschränkt werden. D. h. der Ausstrahlwinkel jedes Lichtsenderelement bzw. der Empfangswinkel jedes Lichtempfangselement wird durch sogenannte Kanäle eingeschränkt. Dies wird bei Lichtgittern üblicherweise mit optischen Modulen gewährleistet. Jedes optische Modul weist mindestens ein Tubusarray auf, wobei die Tuben des Tubusarrays die Kanäle bilden. Somit verhindern die Tuben des Tubusarrays der optischen Module ein optisches Übersprechen zwischen den Lichtsenderelementen und/oder den Lichtempfangselementen. DE202013104607U beschreibt einen solchen optoelektronischen Sensor. Es ist daher die Aufgabe der vorliegenden Erfindung, einen optoelektronischen Sensor derart zu verbessern, dass eine Kaskadierung einfach und ohne optisches Übersprechen an den Verbindungsstellen erzielbar ist.

Die Aufgabe wird erfindungsgemäß gelöst durch einen optoelektronischen Sensor mit mindestens einer Elektronikkarte, die Lichtsenderelemente und/oder Lichtempfangselemente aufweist, und mit zumindest zwei optischen Modulen, die auf der Elektronikarte befestigbar sind, wobei jedes optische Modul ein Tubusarray, das eine Vielzahl von Tuben aufweist, ein offenes Ende und ein geschlossenes Ende umfasst, wobei das offene Ende des optischen Moduls aus einem offenen ersten Verbindungselement einer Verbindung des Tubusarrays besteht und Wandverbindungselemente umfasst, und das geschlossene Ende des optischen Moduls aus einem geschlossenen zweiten Verbindungselement der Verbindung besteht, das eine Außenwand aufweist, die derart formschlüssig zu den Wandverbindungselementen des offenen Endes des optischen Moduls ausgebildet ist, so dass bei einem Zusammenstecken eines offenen Endes eines optischen Moduls und eines geschlossenen Endes eines weiteren optischen Moduls die beiden Verbindungselemente der Verbindung einen Verbindungstubus bilden, der den Tuben des Tubusarrays gleicht.

Gemäß einem bevorzugten Ausführungsbeispiel besteht das offene erste Verbindungselement aus drei Seitenwänden des Verbindungstubus' und ist zum Ende des optischen Moduls hin offen.

Gemäß einem weiteren bevorzugten Ausführungsbeispiel bildet die Außenwand des geschlossenen zweiten Verbindungselements eine vierte Seitenwand des Verbindungstubus, wenn das erste und zweite Verbindungselement ineinander gesteckt sind.

Gemäß einem weiteren bevorzugten Ausführungsbeispiel sind die Wandverbindungselemente an gegenüberliegenden Verbindungswänden des offenen ersten Verbindungselements angeordnet.

Gemäß einem weiteren bevorzugten Ausführungsbeispiel bilden die Wandverbindungselemente mit dem offenen ersten Verbindungselement eine C-Form. Hieraus ergibt sich der Vorteil, dass im zusammengesteckten Zustand der ersten und zweiten Verbindungselemente der Verbindung die Wandverbindungselemente den gebildeten Verbindungstubus optisch abschirmen. D. h. kein Licht kann durch die Spalten zwischen den Seitenwänden des ersten und zweiten Verbindungselements aus- bzw. eintreten.

Gemäß einem weiteren bevorzugten Ausführungsbeispiel sind die Wandverbindungselemente auf der zu der Elektronikkarte gerichteten Seite offen, so dass das offene erste Verbindungselement auf das geschlossene zweite Verbindungselement in Richtung der Elektronikkarte aufsteckbar ist. Daraus ergibt sich der Vorteil, dass ein präzises Zusammenstecken der optischen Module möglich ist. Ferner wird der Zusammenbau des optoelektronischen Sensors erleichtert, so dass Produktionskosten reduziert werden können.

Gemäß einem weiteren bevorzugten Ausführungsbeispiel sind die Wandverbindungselemente auf der von der Elektronikkarte abgewandten Seite mittels Wandelemente geschlossen. Hierdurch ist der Verbindungstubus auch in Richtung einer optischen Achse des optoeletronischen Sensors vorteilhafterweise optisch abgeschirmt.

Gemäß einem weiteren bevorzugten Ausführungsbeispiel weisen die Wandverbindungselemente jeweils eine Nut auf, in die das geschlossene zweite Verbindungselement einschiebbar ist. Es ergibt sich der Vorteil, dass bei der Montage der optischen Module eine genaue Führung der Module gegeben ist.

Gemäß einem weiteren bevorzugten Ausführungsbeispiel ist die Nut auf einer Innenseite des jeweiligen Wandverbindungselements vorgesehen, so dass die Nuten gegenüberliegend angeordnet sind.

Gemäß einem weiteren bevorzugten Ausführungsbeispiel weist der Verbindungstubus eine gleiche Geometrie und Wandoberflächenbeschaffenheit wie die Tuben des Tubusarrays auf. Hierdurch hat der Verbindungstubus vorteilhafterweise die gleichen optischen Eigenschaften wie die Tuben der optischen Module.

Gemäß einem weiteren bevorzugten Ausführungsbeispiel umfassen die Wandverbindungselemente Verriegelungselemente zum Verriegeln der optischen Module untereinander.

Der erfindungsgemäße optoelektronische Sensor kann auf ähnliche Weise durch weitere Merkmale ausgestaltet werden und zeigt dabei ähnliche Vorteile. Derartige weitere Merkmale sind beispielhaft, aber nicht abschließend, in den sich an dem unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische 3D-Darstellung eines erfindungsgemäßen optoelektronischen Sensors ohne ein Außengehäuse;
- Fig. 2: eine schematische 3D-Darstellung eines erfindungsgemäßen optischen Moduls;
- Fig. 2A: eine schematische 3D-Detaildarstellung eines offenen Endes des erfindungsgemäßen optischen Moduls; und
- Fig. 2B: eine schematische 3D-Detaildarstellung eines geschlossenen Endes des erfindungsgemäßen optischen Moduls.

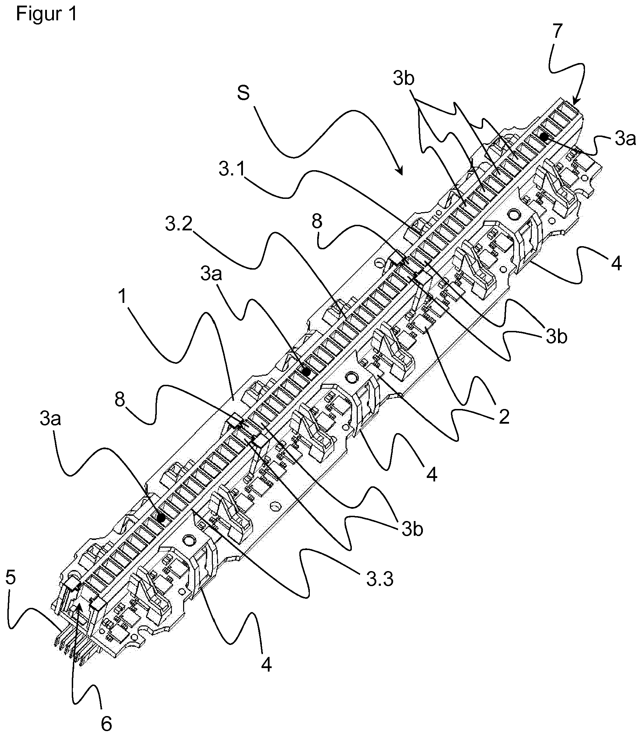

In der Figur 1 ist eine schematische 3D-Darstellung eines erfindungsgemäßen optoelektronischen Sensors S gezeigt, wobei das Außengehäuse des erfindungsgemäßen optoelektronischen Sensors S ausgeblendet ist.

Der erfindungsgemäße optoelektronische Sensors S weist zumindest eine Elektronikkarte 1 auf, auf der die Elektronikelemente 2 des erfindungsgemäßen optoelektronischen Sensors S aufgesteckt sind. Auf die Elektronikkarte 1 sind ferner Lichtsenderelemente und/oder Lichtempfangselemente des erfindungsgemäßen optoelektronischen Sensors S aufgesteckt, die in der gezeigten Figur 1 durch optische Module 3.1, 3.2, 3.3 überdeckt sind.

Das dargestellte bevorzugte Ausführungsbeispiel des erfindungsgemäßen optoelektronischen Sensors S weist eine einzige Elektronikkarte 1 und drei optische Module 3.1, 3.2, 3.3 auf, wobei die drei optischen Module 3.1, 3.2, 3.3 mittels Haltebügel 4 an die Elektronikkarte 1 arretiert sind. Die Elektronikkarte 1 weist einen Stecker 5 auf, mit dem die Elektronikkarte 1 mit weiteren, nicht-dargestellten Elektronikkarten elektrisch verbunden werden kann, so dass eine Kaskadierung des erfindungsgemäßen optoelektronischen Sensors S möglich wäre.

Die dargestellten optischen Module 3.1, 3.2, 3.3 umfasst jeweils ein Tubusarray 3a, das eine Vielzahl von Tuben 3b, in dem gezeigten bevorzugten Ausführungsbeispiel 19 Tuben 3b, aufweist. Jedes optische Modul 3.1, 3.2, 3.3 umfasst ein offenes Ende 6 und ein geschlossenes Ende 7.

Aus der gezeigten Figur 1 sind das offene Ende 6 des dritten optischen Moduls 3.3 und das geschlossene Ende 7 des ersten optischen Moduls 3.1 zu sehen.

Ferner sind zwei, nachfolgend noch näher erläuterte Verbindungstuben 8 gezeigt, die jeweils zwischen zwei erfindungsgemäßen optischen Module 3.1, 3.2, 3.3 angeordnet sind.

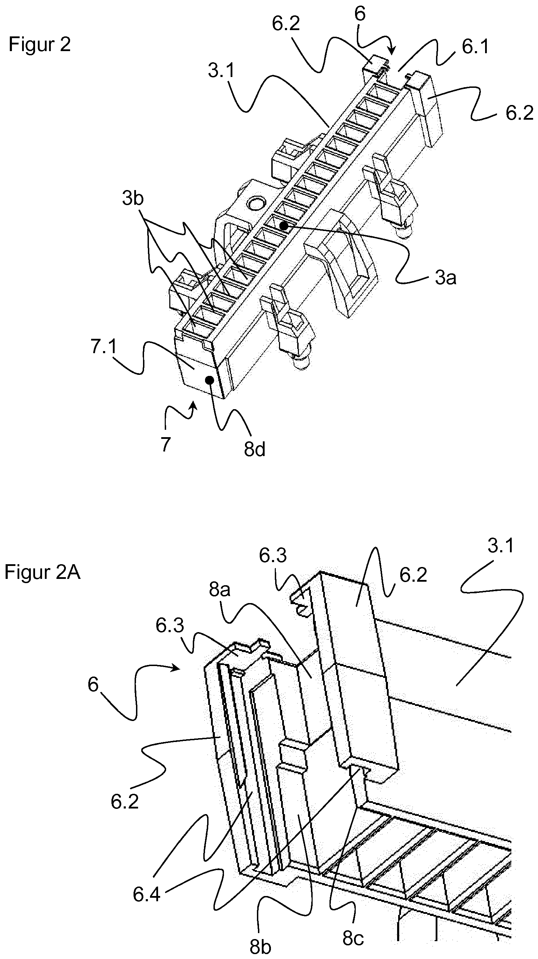

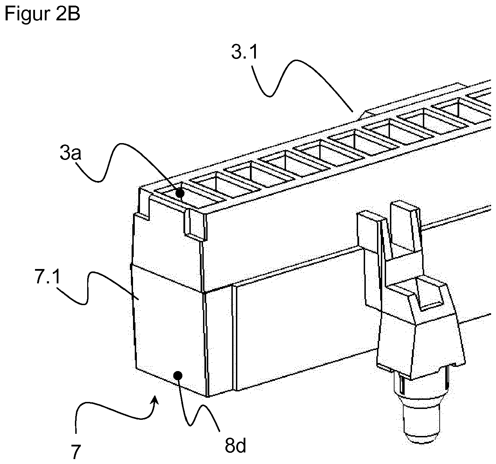

Ein einzelnes erfindungsgemäßes optisches Modul 3.1 ist in der Figur 2 schematisch in 3D dargestellt. Das erfindungsgemäße optische Modul 3.1 umfasst das Tubusarray 3a mit den beispielhaften 19 Tuben 3b, das offene Ende 6 und das geschlossene Ende 7. Das offene Ende 6 des erfindungsgemäßen optischen Moduls 3.1 besteht aus einem offenen ersten Verbindungselement 6.1 einer Verbindung des Tubusarrays 3a. Weiterhin umfasst das offene Ende 6 des erfindungsgemäßen optischen Moduls 3.1 Wandverbindungselemente 6.2, die vorzugsweise mit dem offenen ersten Verbindungselement 6.1 eine C-Form an dem offenen Ende 6 des erfindungsgemäßen optischen Moduls 3.1 bilden.

Das geschlossene Ende 7 des erfindungsgemäßen optischen Moduls 3.1 besteht aus einem geschlossenen zweiten Verbindungselement 7.1 der Verbindung, wobei das geschlossene zweite Verbindungselement 7.1 eine Außenwand 8d aufweist.

Erfindungsgemäß ist die Außenwand des geschlossenen zweiten Verbindungselements 7.1 derart formschlüssig zu den Wandverbindungselementen 6.2 des offenen Endes 6 des erfindungsgemäßen optischen Moduls 3.1 ausgebildet, so dass bei einem Zusammenstecken eines offenen Endes 6 eines erfindungsgemäßen optischen Moduls, zum Beispiel des Moduls 3.1 in der Figur 1, und eines geschlossenen Endes 7 eines erfindungsgemäßen optischen Moduls, zum Beispiel des Moduls 3.1 in der Figur 1, die beiden Verbindungselemente 6.1 und 7.1 der Verbindung einen in der Figur 1 gezeigten Verbindungstubus 8 bilden, wobei der Verbindungstubus 8 den 19 Tuben 3b des Tubusarrays 3a gleicht.

D. h. mit anderen Worten, wenn ein erfindungsgemäßes optisches Modul 3.1 bzw. 3.2 mit einem weiteren erfindungsgemäßen optischen Modul 3.2 bzw. 3.3 zusammengesteckt wird, um eine Kaskadierung zu ermöglichen, bilden das offene Ende 6 des einen erfindungsgemäßen optischen Moduls 3.1 bzw. 3.2 und das geschlossene Ende 7 des anderen erfindungsgemäßen optischen Moduls 3.2 bzw. 3.3 den Verbindungstubus 8, der für ein an der Verbindungsstelle befindliches Lichtsenderelement oder Lichtempfangselement der Elektronikkarte 1 als Tubus fungieren kann. Hierbei weist der Verbindungstubus 8 identische Geometrien und optische Eigenschaften wie die anderen 19 Tuben 3b des Tubusarrays 3a der erfindungsgemäßen optischen Module 3.1, 3.2, 3.3 auf.

In der Figur 2A ist eine 3D-Detaildarstellung des offenen Endes 6 bzw. des offenen ersten Verbindungselements 6.1 des erfindungsgemäßen optischen Moduls 3.1 gezeigt. Hierbei besteht das offene erste Verbindungselement 6.1 aus drei Seitenwänden 9a, 9b, 9c des Verbindungstubus 8 und ist zum Ende des erfindungsgemäßen optischen Moduls 3.1 hin offen. Die drei Seitenwände umfassen eine breite Trennwand 8a, die das erste offene Verbindungselement 6.1 von dem innenliegenden Tubus 3b des Tubusarrays 3a trennt, und zwei im Vergleich zu der breiten Trennwand 8a schmaleren Verbindungswände 8b und 8c.

An den Verbindungswänden 8b und 8c ist jeweils ein Wandverbindungselement 6.2 angeordnet, so dass die Wandverbindungselemente 6.2, die Verbindungswände 8b und 8c, und die Trennwand 8a zusammen die erwähnte C-Form darstellen.

Die Wandverbindungselemente 6.2 sind auf der zu der Elektronikkarte 1 gerichteten Seite offen, so dass, wenn ein erfindungsgemäßes optisches Modul 3.3 bereits auf die Elektronikkarte 1 gesteckt ist, das erste offene Verbindungselement 6.1 des weiteren erfindungsgemäßen optischen Moduls 3.2 auf das zweite geschlossene Verbindungselement 7.1 des bereits gesteckten erfindungsgemäßen optischen Moduls 3.3 in Richtung der Elektronikkarte 1 einfach aufgesteckt werden kann.

Auf der von der Elektronikkarte 1 abgewandten Seite sind die Wandverbindungselemente 6.2 mittels Wandelemente 6.3 geschlossen. Die Wandelemente 6.3 dienen einerseits beim Zusammenstecken der erfindungsgemäßen optischen Module 3.1, 3.2, 3.3 als Anschlag und andererseits im Betrieb als optische Abschirmung für den gebildeten Verbindungstubus 8. Dadurch kann kein Störlicht aus/in dem Verbindungstubus 8 auf/von den/dem benachbarten Tubus 3b des angesteckten erfindungsgemäßen optischen Moduls übersprechen.

Zum Erleichtern des Zusammensteckens der beiden Verbindungselementen 6.1 und 7.1 der Verbindung weisen die Wandverbindungselemente 6.2 jeweils eine Nut 6.4 auf, die auf einer Innenseite der Wandverbindungselemente 6.2 vorgesehen sind und an einem Ende durch die Wandelemente 6.3 abgeschlossen sind, so dass die Nuten 6.4 gegenüberliegend angeordnet sind und das zweite geschlossene Verbindungselement 7.1 in die Nuten 6.4 einschiebbar ist.

Die Nuten 6.4 führen das zweite geschlossene Verbindungselement 7.1 beim Zusammenstecken der erfindungsgemäßen optischen Module 3.1, 3.2, 3.3, wodurch ein präzises Zusammenstecken zusätzlich ermöglicht wird.

Wie in der Figur 2B gezeigt, die eine 3D-Detaildarstellung des geschlossenen Endes 7, insbesondere des zweiten geschlossenen Verbindungselements 7.1, des erfindungsgemäßen optischen Moduls 3.1 darstellt, bildet das zweite geschlossene Verbindungselement 7.1 die Außenwand 8d des letzten Tubus 3b des erfindungsgemäßen optischen Moduls 3.1. Hierbei ist die Außenwand 8d formschlüssig zu den Wandverbindungselementen 6.2 des ersten offenen Verbindungselements 6.1. Zusätzlich sind die geometrischen Maße der Außenwand 8d derart ausgelegt, so dass in einem zusammengesteckten Zustand der Außenwand 8d in den Nuten 6.4 der Wandverbindungselemente 6.2, d. h. montierter Zustand des ersten offenen Verbindungselements 6.1 mit dem zweiten geschlossenen Verbindungselement 7.1, der Verbindungstubus 8 mit identischen geometrischen Maßen wie die übrigen Tuben 3b des erfindungsgemäßen optischen Moduls 3.1, 3.2, 3.3 gebildet ist.

Ferner sind die Geometrien und Oberflächen der Innenflächen der ersten offenen und zweiten geschlossenen Verbindungselemente 6.1 und 7.1, d. h. der Trennwand 8a, der Verbindungswände 8b und 8c und der Außenwand 8d, derart ausgebildet, dass der gebildete Verbindungstubus 8 die gleichen optischen Eigenschaften wie die übrigen Tuben 3b des erfindungsgemäßen optischen Moduls 3.1, 3.2, 3.3 aufweist. Hierbei können die Tuben 3b im Bereich der Lichtführung matt sein, eine Rippenstruktur aufweisen oder mit einer lichtabsorbierenden Schicht versehen sein, so dass die Störsignalunterdrückung verbessert werden kann.

Zusätzlich umfassen die Wandverbindungselemente 6.2 des offenen Endes 6 des erfindungsgemäßen optischen Moduls 3.1, 3.2, 3.3 Verriegelungselemente, die die erfindungsgemäßen optischen Module 3.1, 3.2, 3.3 untereinander verriegeln. Die Verriegelungselemente können beispielweise Rasthaken sein. Hierdurch weisen die erfindungsgemäßen optischen Module 3.1, 3.2, 3.3 im zusammengesteckten Zustand eine hohe Stabilität auf, so dass die Elektronikkarten 1, auf die die zusammengesteckten erfindungsgemäßen optischen Module 3.1, 3.2, 3.3 montiert sind, ebenfalls stabil und präzise zueinander montiert sein können. Auf zusätzliche Haltemittel oder Kunststoffverbindermittel zum Ausrichten und Halten benachbarte Elektronikkarten 1 kann entsprechend verzichtet werden.

### Bezugszeichenliste

- 1: Elektronikkarte
- 2: Elektronikelemente
- 3.1,3.2,: Optische Module
- 3.3 3a: Tubusarray
- 3b: Tubus/Tuben
- 4: Haltebügeln
- 5: Stecker
- 6: Offenes Ende des optischen Moduls
- 6.1: Offenes erstes Verbindungselement
- 6.2: Wandverbindungselement
- 6.3: Wandelement
- 6.4: Nut
- 7: Geschlossenes Ende des optischen Moduls
- 7.1: Geschlossenes zweites Verbindungselement
- 8: Verbindungstubus
- 8a: Trennwand
- 8b, 8c: Verbindungswand
- 8d: Außenwand
- S: Optoelektronischer Sensor

## Patentansprüche

1. Optoelektronischer Sensor (S) mit mindestens einer Elektronikkarte (1), die Lichtsenderelemente und/oder Lichtempfangselemente aufweist, und mit zumindest zwei optischen Modulen (3.1, 3.2, 3.3), die auf der Elektronikarte (1) befestigbar sind,
wobei jedes optische Modul (3.1, 3.2, 3.3) ein Tubusarray (3a), umfasst das eine Vielzahl von Tuben (3b) aufweist, **dadurch gekennzeichnet, dass** jedes optische Modul ein offenes Ende (6) und ein geschlossenes Ende (7) umfasst,
wobei das offene Ende (6) des optischen Moduls (3.1, 3.2, 3.3) aus einem offenen ersten Verbindungselement (6.1) einer Verbindung des Tubusarrays (3a) besteht und Wandverbindungselemente (6.2) umfasst, und das geschlossene Ende (7) des optischen Moduls (3.1, 3.2, 3.3) aus einem geschlossenen zweiten Verbindungselement (7.1) der Verbindung besteht, das eine Außenwand (8d) aufweist, die derart formschlüssig zu den Wandverbindungselementen (6.2) des offenen Endes (6) des optischen Moduls (3.1, 3.2, 3.3) ausgebildet ist, so dass bei einem Zusammenstecken eines offenen Endes (6) eines optischen Moduls (3.1) und eines geschlossenen Endes (7) eines weiteren optischen Moduls (3.2) die beiden Verbindungselemente (6.1, 7.1) der Verbindung einen Verbindungstubus (8) bilden, der den Tuben (3b) des Tubusarrays (3a) gleicht.

2. Optoelektronischer Sensor (S) nach Anspruch 1, wobei das offene erste Verbindungselement (6.1) aus drei Seitenwänden des Verbindungstubus (8) besteht und zum Ende des optischen Moduls (3.1, 3.2, 3.3) hin offen ist.

3. Optoelektronischer Sensor (S) nach Anspruch 1 oder 2, wobei die Außenwand (8d) des geschlossenen zweiten Verbindungselements (7.1) eine vierte Seitenwand des Verbindungstubus' (8) bildet, wenn das erste und zweite Verbindungselement (6.1, 7.1) ineinander gesteckt sind.

4. Optoelektronischer Sensor (S) nach einem der vorhergehenden Ansprüche, wobei die Wandverbindungselemente (6.2) an gegenüberliegenden Verbindungswänden (8b, 8c) des offenen ersten Verbindungselements (6.1) angeordnet sind.

5. Optoelektronischer Sensor (S) nach einem der vorhergehenden Ansprüche, wobei die Wandverbindungselemente (6.2) mit dem offenen ersten Verbindungselement (6.1) eine C-Form bilden.

6. Optoelektronischer Sensor (S) nach einem der vorhergehenden Ansprüche, wobei die Wandverbindungselemente (6.2) auf der zu der Elektronikkarte (1) gerichteten Seite offen sind, so dass das offene erste Verbindungselement (6.1) auf das geschlossene zweite Verbindungselement (7.1) in Richtung der Elektronikkarte (1) aufsteckbar ist.

7. Optoelektronischer Sensor (S) nach einem der vorhergehenden Ansprüche, wobei die Wandverbindungselemente (6.2) auf der von der Elektronikkarte (1) abgewandten Seite mittels Wandelemente (6.3) geschlossen sind.

8. Optoelektronischer Sensor (S) nach einem der vorhergehenden Ansprüche, wobei die Wandverbindungselemente (6.2) jeweils eine Nut (6.4) aufweisen, in die (6.4) das geschlossene zweite Verbindungselement (7.1) einschiebbar ist.

9. Optoelektronischer Sensor (S) nach Anspruch 8, wobei die Nut (6.4) auf einer Innenseite des jeweiligen Wandverbindungselements (6.2) vorgesehen ist, so dass die Nuten (6.4) gegenüberliegend angeordnet sind.

10. Optoelektronischer Sensor (S) nach einem der vorhergehenden Ansprüche, wobei der Verbindungstubus (8) eine gleiche Geometrie und Wandoberflächenbeschaffenheit wie die Tuben (3b) des Tubusarrays (3a) aufweist.

11. Optoelektronischer Sensor (S) nach einem der vorhergehenden Ansprüche, wobei die Wandverbindungselemente (6.2) Verriegelungselemente zum Verriegeln der optischen Module (3.1, 3.2, 3.3) untereinander umfassen.

## Claims

1. An optoelectronic sensor (S) having at least one electronic card (1), with the electronic card comprising light transmitter elements and/or light reception elements, and having at least two optical modules (3.1, 3.2, 3.3) which can be fastened to the electronic card (1),
wherein each optical module (3.1, 3.2, 3.3) comprises a tube array (3a) having a plurality of tubes (3b), **characterized in that** each optical module comprises an open end (6) and a closed end (7); and
wherein the open end (6) of the optical module (3.1, 3.2, 3.3) comprises an open first connection element (6.1) of a connection of the tube array (3a) and comprises wall connection elements (6.2) and the closed end (7) of the optical module (3.1, 3.2, 3.3) comprises a closed second connection element (7.1) of the connection which has an outer wall (8d) which is configured with shape matching to the wall connection elements (6.2) of the open end (6) of the optical module (3.1, 3.2, 3.3) such that, on a plugging together of an open end (6) of an optical module (3.1) and of a closed end (7) of a further optical module (3.2), the two connection elements (6.1, 7.1) of the connection form a connection tube (8) which is like the tubes (3b) of the tube array (3a).

2. The optoelectronic sensor (S) in accordance with claim 1, wherein the open first connection element (6.1) comprises three side walls of the connection tube (8) and is open towards the end of the optical module (3.1, 3.2, 3.3).

3. The optoelectronic sensor (S) in accordance with claim 1 or 2, wherein the outer wall (8d) of the closed second connection element (7.1) forms a fourth side wall of the connection tube (8) when the first and second connections elements (6.1, 7.1) are plugged into one another.

4. The optoelectronic sensor (S) in accordance with one of the preceding claims, wherein the wall connection elements (6.2) are arranged at oppositely disposed connection walls (8b, 8c) of the open first connection element (6.1).

5. The optoelectronic sensor (S) in accordance with one of the preceding claims, wherein the wall connection elements (6.2) form a C shape with the open first connection element (6.1).

6. The optoelectronic sensor (S) in accordance with one of the preceding claims, wherein the wall connection elements (6.2) are open at the side directed to the electronic card (1) such that the open first connection element (6.1) can be plugged onto the closed second connection element (7.1) in the direction of the electronic card (1).

7. The optoelectronic sensor (S) in accordance with one of the preceding claims, wherein the wall connection elements (6.2) are closed by means of wall elements (6.3) at the side remote from the electronic card (1).

8. The optoelectronic sensor (S) in accordance with one of the preceding claims, wherein the wall connection elements (6.2) each have a groove (6.4) into which (6.4) the closed second connection element (7.1) can be pushed.

9. The optoelectronic sensor (S) in accordance with claim 8, wherein the groove (6.4) is provided at an inner side of the respective wall connection element (6.2) so that the grooves (6.4) are arranged opposite.

10. The optoelectronic sensor (S) in accordance with one of the preceding claims, wherein the connection tube (8) has the same geometry and wall surface property as the tubes (3b) of the tube array (3a).

11. The optoelectronic sensor (S) in accordance with one of the preceding claims, wherein the wall connection elements (6.2) comprise latching elements for latching the optical modules (3.1, 3.2, 3.3) to one another.

## Revendications

1. Capteur optoélectronique (S) comprenant au moins une carte électronique (1), qui comprend des éléments émetteurs de lumière et/ou des éléments récepteurs de lumière, et comprenant au moins deux modules optiques (3.1, 3.2, 3.3), qui sont susceptibles d'être fixés sur la carte électronique (1),
dans lequel chaque module optique (3.1, 3.2, 3.3) inclut un réseau de tubes (3a), qui comprend une pluralité de tubes (3b),
**caractérisé en ce que** chaque module optique inclut une extrémité ouverte (6) et une extrémité fermée (7), de sorte que l'extrémité ouverte (6) du module optique (3.1, 3.2, 3.3) est constituée d'un premier élément de liaison ouvert (6.1) d'une liaison du réseau de tubes (3a) et inclut des éléments de liaison de paroi (6.2), et l'extrémité fermée (7) du module optique (3.1, 3.2, 3.3) est constituée par un second élément de liaison fermé (7.1) de la liaison, élément qui comprend une paroi extérieure (8d), qui est réalisé à coopération de formes par rapport aux éléments de liaison de paroi (6.2) de l'extrémité ouverte (6) du module optique (3.1, 3.2, 3.3) de telle façon que lors d'un emboîtement d'une extrémité ouverte (6) d'un module optique (3.1) et d'une extrémité fermée (7) d'un autre module optique (3.2), les deux éléments de liaison (6.1, 7.1) de la liaison forme d'un tube de liaison (8), qui est égal au tube (3b) du réseau de tube (3a).

2. Capteur optoélectronique (S) selon la revendication 1, dans lequel le premier élément de liaison ouvert (6.1) est constitué de trois parois latérales du tube de liaison (8) et est ouvert en direction de l'extrémité du module optique (3.1, 3.2, 3.3).

3. Capteur optoélectronique (S) selon la revendication 1 ou 2, dans lequel la paroi extérieure (8d) du second élément de liaison fermée (7.1) forme une quatrième paroi latérale du tube de liaison (8), quand le premier et le second élément de liaison (6.1, 7.1) sont emboîtés l'un dans l'autre.

4. Capteur optoélectronique (S) selon l'une des revendications précédentes, dans lequel les éléments de liaison de paroi (6.2) sont agencés sur des parois de liaison opposées (8b, 8c) du premier élément de liaison ouvert (6.1).

5. Capteur optoélectronique (S) selon l'une des revendications précédentes, dans lequel les éléments de liaison de paroi (6.2) forment avec le premier élément de liaison ouvert (6.1) une forme en C.

6. Capteur optoélectronique (S) selon l'une des revendications précédentes, dans lequel les éléments de liaison de paroi (6.2) sont ouverts vers le côté orienté vers la carte électronique (1), de sorte que le premier élément de liaison ouvert (6,1) peut être emboîté sur le second élément de liaison fermé (7.1) en direction de la carte électronique (1).

7. Capteur optoélectronique (S) selon l'une des revendications précédentes, dans lequel les éléments de liaison de paroi (6, 2) sont fermés sur le côté détourné de la carte électronique (1) au moyen d'éléments de paroi (6.3).

8. Capteur optoélectronique (S) selon l'une des revendications précédentes, dans lequel les éléments de liaison de paroi (6.2) comportent chacun une gorge (6.4) dans laquelle le second élément de liaison fermé (7.1) peut être enfilé.

9. Capteur optoélectronique (S) selon la revendication 8, dans lequel la gorge (6.4) est prévue sur un côté intérieur de l'élément de liaison de paroi (6.2) respectif, de sorte que les gorges (6.4) sont agencées en opposition.

10. Capteur optoélectronique (S) selon l'une des revendications précédentes, dans lequel le tube de liaison (8) présente une même géométrie et une même propriété de surface de paroi que les tubes (3b) du réseau de tubes (3a).

11. Capteur optoélectronique (S) selon l'une des revendications précédentes, dans lequel les éléments de liaison de paroi (6.2) incluent des éléments de verrouillage pour verrouiller les modules optiques (3.1, 3.2, 3.3).
